# EUROPEAN PATENT APPLICATION

(11) **EP 3 556 490 A1**
(43) Date of publication of application: **23.10.2019**
(21) Application number: 19163590.3
(22) Date of filing: 19.03.2019
(51) Int. Cl.: B22F 3/105, B33Y 80/00, B33Y 10/00

(54) **STRESS RELIEF FOR ADDITIVE LAYER MANUFACTURING**

(30) Priority: 19.04.2018 GB 201806369
(71) Applicant: Rolls-Royce plc, London SW1E 6AT (GB)
(72) Inventor: Stapleton, David, Derby, Derbyshire DE24 8BJ (GB); O'Brien, Stuart, Derby, Derbyshire DE24 8BJ (GB)
(74) Representative: Rolls-Royce plc

(57) **Abstract**

The present disclosure relates to techniques for stress relief in additive layer manufacturing (ALM). Example embodiments include a method for additive layer manufacturing of a metallic component, comprising the steps of: providing a substrate (20); depositing a first layer (22) of material on the substrate (20); depositing a plurality of second layers of material on the first layer (22) to form the metallic component (21), wherein the first layer (22) forms a stress relieving layer between the plurality of second layers and the substrate (20), the stress relieving layer having a lower shear stiffness compared to the metallic component (21).

## Description

The present disclosure relates to techniques for stress relief in additive layer manufacturing (ALM), in particular relating to fabrication of metallic components by ALM.

ALM is a technique that allows for articles to be manufactured of arbitrary shape without moulding or machining. Articles made via ALM are formed layer by layer, with each additional layer being fused to previous layers. The technique can be applied to a wide range of materials including polymers, metals and ceramics, each with particular requirements for providing the required feedstock, typically in the form of a particulate material, and power to cause fusion of the layers.

For polymeric materials, ALM may involve the application of layers by various routes, including selective solidification of a liquid precursor, fusing of a layer of powder or application of a layer by extrusion of molten material. The low stiffness and thermoplastic nature of many polymeric materials enables articles to be made in a variety of ways with reasonable tolerances. For other materials such as metals, fabrication options may be more limited, especially if the melting point of the metal is high or if the metal is reactive. Metallic ALM components are typically formed from a powder bed, with a laser beam used to selectively fuse parts of a new layer of material to make a desired subsequent layer of metal. Further layers are then applied by applying a further layer of powder and repeating the process. A component is then gradually built up layer by layer in a bed of powder. Once the component is fully formed, it is removed from the powder bed.

Ceramic components may also be manufactured by ALM but, due to their high melting point, high stiffness and generally low thermal conductivity, it is typically not possible to directly generate an ALM part from a powder precursor. Instead, a powder may be used to generate a fused green component that can then be fired to form the finished component.

A problem with forming components via ALM, particularly for metallic components, is that directly fusing one layer on top of previous layers can generate high residual stresses within the component. An ALM component will typically be formed on a substrate, which may be of the same or different material. In either case, as each layer is formed stress will be built up due to thermal contraction of the layers as they cool from being fused. This may cause distortion in the finished component, resulting in the need for post-fabrication machining. If the substrate on which the component is built is of sufficient thickness and strength, distortion of the component may be reduced or eliminated, but this will lead to higher residual stresses in the component. Typically the substrate may be a different material to the component being manufactured, which can result in a thermal mismatch leading to higher residual stresses.

According to a first aspect there is provided a method for additive layer manufacturing of a metallic component, comprising the steps of:
providing a substrate;
depositing a first layer of material on the substrate;
depositing a plurality of second layers of material on the first layer to form the metallic component,
wherein the first layer forms a stress relieving layer between the plurality of second layers and the substrate, the stress relieving layer having a lower shear stiffness compared to the metallic component.

The use of a stress relieving layer between the component and the substrate allows for differential stresses to be accommodated during fabrication, thereby reducing or eliminating distortion of the component and/or the substrate during fabrication. This may also reduce distortion of the component as it progresses through any post fabrication processing steps such as heat treatment or hot isostatic pressing.

The stress relieving layer may for example be provided by the stress relieving layer having a lower density compared with the metallic component, resulting in a lower shear stiffness that is in proportion to the reduction in density. The shear stiffness of the stress relieving layer may be defined between a first plane joining the substrate to the stress relieving layer and a second plane joining the stress relieving layer to the component.

The stress-relieving layer may have a first shear stiffness in a first direction along the first plane that is different to a second shear stiffness in a second direction along the first plane orthogonal to the first direction. The first shear stiffness may for example be reduced relative to the second shear stiffness where the first direction is aligned with a longer dimension of the component along the first plane. Having a reduced shear stiffness in a direction aligned with a long dimension of the component allows more strain to be relieved in this direction through flexing of the layer, thereby accommodating components of different shapes through design of the stress-relieving layer.

A lower density stress-relieving layer may assist to thermally isolate the component from the substrate, which may be beneficial to the microstructure as a result of reduced stresses during post fabrication processing, for example by avoiding or minimising cracking.

If the component is fabricated from a powder feedstock, the stress relieving layer may be formed by the first layer being partially fused, compared to the plurality of second layers making up the component being fully, or more fully, fused. The stress relieving layer may as a result be formed of a porous structure, having pores that are either open (i.e. interconnected throughout the layer) or closed (in which the pores are isolated from each other). The partially fused layers may be formed by altering the parameters used to fuse the plurality of layers, for example by reducing the power or altering the focus of a laser applied to fuse each layer.

In alternative embodiments the stress relieving layer may be structured to have a lower shear stiffness than the component, for example by comprising an array of columns connecting the substrate to the component. Other structures may also achieve the aim of lowering the shear stiffness of the stress relieving layer, for example a lattice-form structure made of an interconnecting network of material or a foam structure.

The method may be particularly applicable to alloys having applications in high temperature environments, such as alloys used for manufacturing turbine blades and guide vanes for high temperature zones in a gas turbine engine. Example alloys are superalloys based on nickel, cobalt or iron alloyed with elements such as boron, carbon, cobalt, chromium, molybdenum, nickel, silicon, titanium, tungsten, iridium, niobium, aluminium, iron, vanadium, tantalum and yttrium. A particular example of an alloy is a gamma prime (y') nickel superalloy, where the stress-relieving layer may result in reduced cracking, reduced residual stress in both the component and the substrate, and reduced deformation in the fabricated component and substrate.

According to a second aspect there is provided a component assembly formed by additive layer manufacturing, the assembly comprising:
a substrate;
a metallic component; and
a stress relieving layer between the metallic component and the substrate,
wherein the stress relieving layer having a lower shear stiffness compared to the metallic component.

The stress relieving layer may comprise a porous structure, a foam structure, or an array of columns connecting the substrate to the component. The columns may form a lattice structure. Other features relating to the first aspect may also apply to the second aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a schematic illustration of an example component fabricated by ALM on a substrate;
Figure 2 is a schematic illustration of an example component with a lower density interface layer fabricated by ALM on a substrate;
Figure 3 is a schematic illustration of a further example component formed on a substrate with an interface comprising a columnar structure;
Figure 4 is a detailed schematic view of a region around a columnar interface between a substrate and a component being formed by ALM;
Figure 5 is a detailed schematic view of the region shown in Figure 4 after thermal contraction of the component;
Figure 6 is a schematic diagram of a region around an alternative type of interface between a substrate and a component being formed by ALM;
Figure 7 is a schematic diagram of a region around a further alternative type of interface between a substrate and a component being formed by ALM; and
Figure 8 is a schematic flow diagram of an example method of forming a component.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

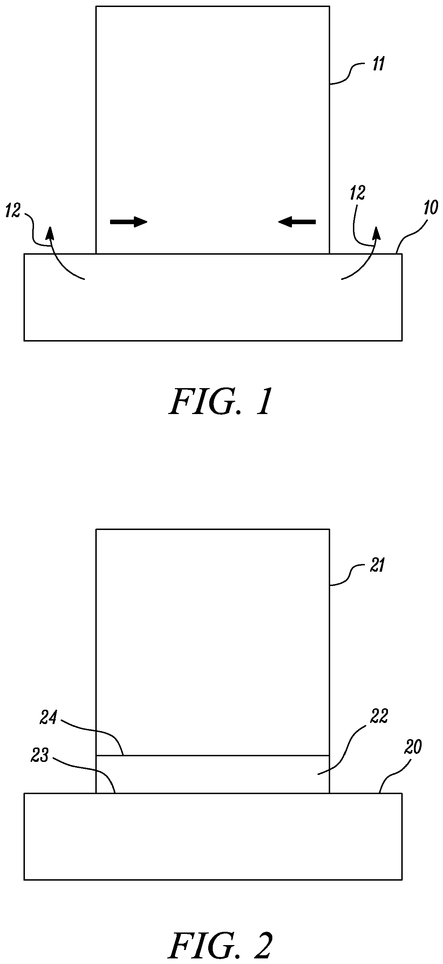

Figure 1 illustrates an example component 11 fabricated on a substrate 10 by ALM. The component 11 may be made up of a plurality of layers formed over one another by fusing a powder feedstock with a laser. As each successive layer is fused, an increasing stress is built up between the substrate 10 and the component 11 due to thermal contraction as the layers cool down from being fused at high temperatures. This may eventually cause the substrate 10 to deform in the general way indicated by arrows 12, which may result in distortion of the component 11. This effect may be reduced to some extent by optimising the method used to fuse each successive layer, and by optimising the substrate, but these techniques are not capable of fully resolving the issue. A heated powder bed may in some cases by used, which can reduce the thermally-caused distortion effects but tends to result in detrimental effects on the residual powder surrounding the component after fabrication.

Figure 2 illustrates the general principle of fabricating a component 21 on a substrate 20 using an intervening stress-relieving layer 22. The layer 22 is formed to have a reduced shear stiffness, or shear modulus, compared with that of the component 21 or of the substrate 20. The shear stiffness is defined between a first plane 23 joining the substrate 20 to the stress relieving layer 22 and a second plane 24 joining the stress relieving layer 22 to the component 21. The shear modulus of the stress-relieving layer may be engineered to be different in the direction of the planes 23, 24 compared with other directions, such as orthogonal to the planes 23, 24. In the example illustrated in Figure 2, the stress-relieving layer 22 may be a partially fused layer of the same material as that making up the component 21, forming a porous structure having a reduced shear stiffness.

The density of the stress-relieving layer 22 may be a fraction of that of the component 21, for example within a range of 0.2 to 0.9 of the density of the component 21. If the stress-relieving layer 22 is formed via ALM from a powder feedstock, the volume fraction of fused to unfused material throughout the layer 22 may be between 0.2 and 0.9. The material forming the stress-relieving layer 22 may be the same or similar to that forming the component 21, or in some cases may be different, such as when the layer is formed by a different technique. The shear stiffness of the stress-relieving layer 22 may for example be less than 0.7 that of the component, and may be between 0.1 and 0.7 of that of the component 21.

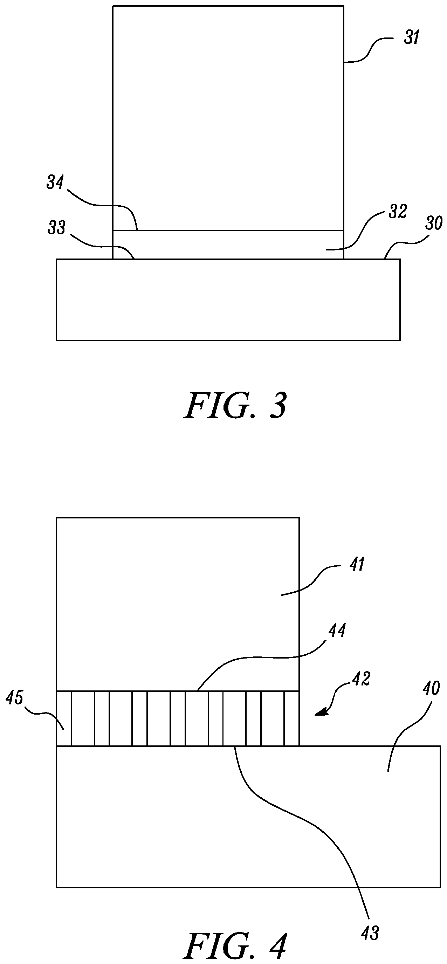

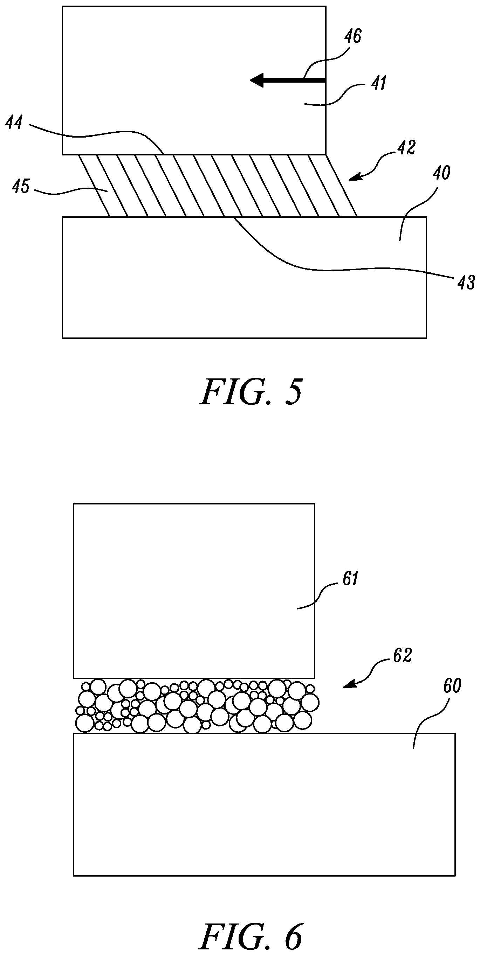

Figure 3 illustrates an alternative form of stress-relieving layer 32 connecting a component 31 to a substrate 30. In this example, the stress-relieving layer 32 comprises an array of columns aligned substantially orthogonally to the planes 33, 34 connecting the layer 32 to the substrate 30 and the component 31 respectively. The columns may be of any suitable cross-sectional shape, such as rectangular, square or circular, and may be arranged to provide a reduced shear stiffness in the direction where the maximum thermal contraction is expected. Rectangular section columns may, for example, be aligned such that their longer axis is orthogonal to the direction of maximum strain expected in the component, so that the columns can more easily deform as the component contracts. This is illustrated further in Figures 4 and 5. In a general aspect therefore, the stress-relieving layer may have a first shear stiffness in a first direction along the plane of the substrate that is different to a second shear stiffness in a second direction along the plane of the substrate orthogonal to the first direction. The first shear stiffness may be reduced relative to the second shear stiffness where the first direction is aligned with a longer dimension of the component in the plane of the substrate.

Figure 4 illustrates schematically an edge portion of a component 41 formed on a substrate 40, with a stress-relieving layer 42 formed from an array of columns 45. The columns 45 are aligned orthogonal to planes 43, 44 connecting the stress-relieving layer 42 with the substrate 40 and component 41 respectively.

Figure 5 illustrates schematically, with displacements exaggerated, the effect on the columns 45 as the component 41 thermally contracts during fabrication. The thermal contraction 46 of the component 41 relative to the substrate 40 causes the columns 45 to distort to accommodate the contraction without causing distortion of the substrate 40. The columns 45 may be structured to flex elastically or plastically depending on the material they are made from.

Figure 6 illustrates schematically a further alternative example of a stress-relieving layer 62 between a substrate 60 and a component 61 being fabricated by ALM. The stress-relieving layer 62 in this case is in the form of a foam structure, which will have a reduced shear stiffness compared to that of either the substrate 60 or the component 61. The foam structure may be formed in layers by ALM as for the component 61 or may alternatively be formed separately and bonded to the substrate 60 by other means before the component 61 is fabricated by ALM over the structure.

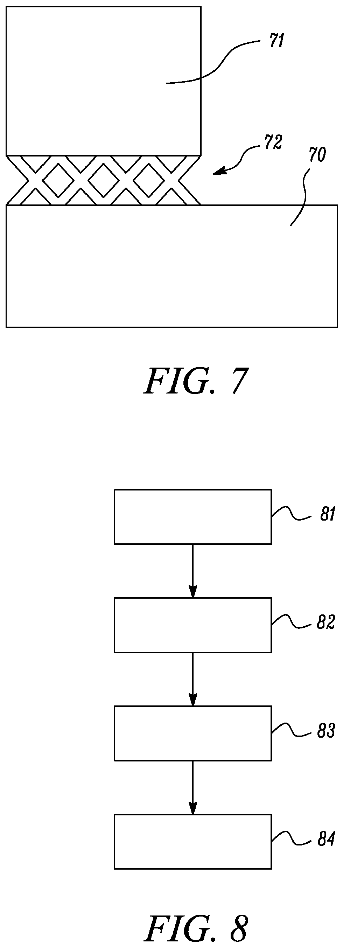

Figure 7 illustrates schematically a further alternative example of a stress-relieving layer 72 between a substrate 70 and a component 71 being fabricated by ALM. The stress-relieving layer 72 in this case is in the form of a latticework of columns. The shear stiffness of such a structure will tend to be higher than an equivalent density structure formed of orthogonal columns as in Figure 4, so can be fabricated to have a lower density than the columnar structure.

Figure 8 illustrates an example flow diagram of a method of fabricating a component by ALM. In a first step 81, a substrate is provided for the component to be fabricated upon. In a second step 82, a first layer is deposited on the substrate, which may be done by ALM or by affixing a prefabricated layer on the substrate. In a third step 83, a component is fabricated over the first layer by depositing a plurality of layers by ALM. After the component is fabricated, and the stress-relieving layer has achieved its function of allowing the component to thermally contract without distorting the substrate, in a fourth step 84 the component may be separated from the substrate. Further finishing steps may then be carried out on the component, such as final machining and/or annealing or other heat treatment steps.

## Claims

1. A method for additive layer manufacturing of a metallic component, comprising the steps of:
providing a substrate (20);
depositing a first layer (22) of material on the substrate (20);
depositing a plurality of second layers of material on the first layer (22) to form the metallic component (21),
wherein the first layer (22) forms a stress relieving layer between the plurality of second layers and the substrate (20), the stress relieving layer (22) having a lower shear stiffness compared to the metallic component (21).

2. The method of claim 1 wherein the stress relieving layer (22) has a lower density compared with the metallic component (21).

3. The method of claim 1 or claim 2 wherein the shear stiffness of the stress relieving layer (42) is defined between a first plane (43) joining the substrate (40) to the stress relieving layer (42) and a second plane (44) joining the stress relieving layer (42) to the component (41).

4. The method of claim 3 wherein the stress-relieving layer (42) has a first shear stiffness in a first direction along the first plane (43) that is different to a second shear stiffness in a second direction along the first plane (43) orthogonal to the first direction.

5. The method of claim 4 wherein the first shear stiffness is reduced relative to the second shear stiffness where the first direction is aligned with a longer dimension of the component along the first plane (43).

6. The method of any preceding claim wherein the stress relieving layer (22) is formed by a plurality of first layers being partially fused from a powdered form of the material.

7. The method of any preceding claim wherein the stress relieving layer (22) comprises a porous structure.

8. The method of any of claims 1 to 5 wherein the stress relieving layer (42) comprises an array of columns (45) connecting the substrate (40) to the component (41).

9. The method of claim 8 wherein the columns form a lattice structure (72).

10. A component assembly formed by additive layer manufacturing, the assembly comprising:
a substrate (20);
a metallic component (21); and
a stress relieving layer (22) between the metallic component (21) and the substrate (20),
wherein the stress relieving layer (22) has a lower shear stiffness compared to the metallic component (21).

11. The component assembly of claim 10 wherein the stress relieving layer (22) comprises a porous structure.

12. The component assembly of claim 10 wherein the stress-relieving layer (42) has a first shear stiffness in a first direction along the first plane (43) that is different to a second shear stiffness in a second direction along the first plane (43) orthogonal to the first direction.

13. The component assembly of claim 12 wherein the first shear stiffness is reduced relative to the second shear stiffness where the first direction is aligned with a longer dimension of the component along the first plane (43).

14. The component assembly of any of claims 10 to 13 wherein the stress relieving layer (42) comprises an array of columns (45) connecting the substrate (40) to the component (41).

15. The component assembly of claim 14 wherein the columns form a lattice structure (72).
